# FASCICULE DE BREVET EUROPEEN

(11) **EP 3 458 278 B1**
(45) Date de publication et mention de la délivrance du brevet: **01.07.2020**
(21) Numéro de dépôt: 17727652.4
(22) Date de dépôt: 11.05.2017
(51) Int. Cl.: B43K 24/16, A45D 40/00, B43K 29/00, G06F 3/0354

(54) **DISPOSITIF MANUEL A DEUX TETES RETRACTABLES A L'AIDE D'UN UNIQUE BOUTON**
MANUELLE VORRICHTUNG MIT ZWEI KÖPFEN, DIE MITHILFE EINES EINZELNEN KNOPFES EINZIEHBAR SIND
MANUAL DEVICE HAVING TWO HEADS THAT ARE RETRACTABLE WITH THE AID OF A SINGLE BUTTON

(30) Priorité: 17.05.2016 FR 1654362
(43) Date de publication de la demande: 27.03.2019
(73) Titulaire: Société BIC, 92110 Clichy (FR)
(72) Inventeur: BEZ, Arnaud, 92380 Garches (FR); MALINVERNI, Samuel, 75018 Paris (FR)
(74) Mandataire: Cabinet Beau de Loménie
(86) Numéro de dépôt international: PCT/FR2017/051131
(87) Numéro de publication internationale: WO 2017/198929

(56) Documents cités:
- WO-A1-2014/191680
- WO-A2-2005/047016
- FR-A1- 2 996 805

## Description

### DOMAINE DE L'INVENTION

L'invention concerne un dispositif manuel longitudinal comprenant deux têtes qui sont chacune montée rétractable à une extrémité du dispositif manuel. Notamment, l'invention concerne des instruments d'écriture, mais pas uniquement.

### ETAT DE LA TECHNIQUE ANTERIEURE

Les dispositifs manuels à deux têtes rétractables connus ne sont généralement pas totalement satisfaisants du point de vue ergonomique, encombrement et fiabilité. L'un de ces dispositifs manuels est connu depuis WO 2005/047016 A2. Il existe donc un besoin en ce sens.

### PRESENTATION DE L'INVENTION

Un mode de réalisation concerne un dispositif manuel s'étendant selon une direction axiale, comprenant un carter présentant une première extrémité distale et une deuxième extrémité distale opposée à la première extrémité distale selon la direction axiale, une première tête mobile axialement entre une position d'utilisation dans laquelle la première tête fait saillie du carter depuis la première extrémité et une position escamotée dans laquelle la première tête est escamotée dans le carter, une deuxième tête mobile axialement entre une position d'utilisation dans laquelle la deuxième tête fait saillie du carter depuis la deuxième extrémité et une position escamotée dans laquelle la deuxième tête est escamotée dans le carter, et un unique bouton latéral configuré pour amener la première tête et la deuxième tête, indépendamment l'une de l'autre, depuis la position escamotée à la position d'utilisation et vice versa, le bouton coopérant avec un premier mécanisme à rochet pour faire passer la première tête de la position escamotée à la position d'utilisation et vice versa, et avec un deuxième mécanisme à rochet pour faire passer la deuxième tête de la position escamotée à la position d'utilisation et vice versa, dans lequel chaque mécanisme à rochet comprend respectivement un premier et un deuxième piston, une première et une deuxième came rotative, une première et une deuxième came fixe recevant respectivement la première et la deuxième came rotative, et un premier et un deuxième ressort.

On comprend que les têtes sont disposées à l'opposé l'une de l'autre selon la direction axiale au sein du dispositif manuel. On comprend également que l'unique bouton latéral permet de faire rentrer/sortir la première tête et la deuxième tête du carter, indépendamment l'une de l'autre. Bien entendu le carter peut être formé d'une seul et même pièce, ou bien de plusieurs pièces. Le carter forme donc la partie extérieure du dispositif manuel. Par exemple, dans le cas d'un instrument d'écriture, par exemple un stylo, le carter est formé par le fût extérieur du stylo.

On comprend que les têtes peuvent être formée par n'importe quel embout d'outil de dispositif manuel, par exemple un embout de clé, de tournevis, une lame, un poinçon, un corps d'écriture (pointe feutre, à bille ou autre équipée d'un réservoir d'encre, portemine, mine graphite, craie ou tout moyen permettant d'écrire sur un substrat), un pinceau, une gomme, un corps de friction, un coussinet pour écran capacitif, un applicateur cosmétique (pinceau, crayon, brosse mascara, applicateur à bille, rouge à lèvres ou tout moyen d'application de cosmétique), etc.

Chaque tête est rétractable grâce à un mécanisme à rochet indépendant l'un de l'autre, le bouton permettant d'actionner chacun de ces mécanismes à rochet, indépendamment l'un de l'autre pour rentrer/sortir chacune des première et deuxième têtes indépendamment l'une de l'autre depuis les première et deuxième extrémités distales du carter, respectivement.

Les mécanismes à rochets sont des mécanismes connus en soi, comprenant un piston, une came rotative, une came fixe et un ressort, par exemple un ressort travaillant en compression. La came rotative coopère selon la direction axiale, directement ou indirectement, avec le piston, avec la came fixe et avec le ressort. En actionnant le piston axialement, le piston pousse la came rotative selon la direction axiale à l'encontre du ressort, cette came rotative pivotant au cours de son mouvement axial et coopère ensuite en butée avec différentes dents de la came fixe grâce au ressort lorsqu'on relâche la pression sur le piston. Ainsi la came rotative est mobile entre deux positions axiales distinctes selon la direction axiale, en fonction de la position axiale des dents de la came fixe avec lesquelles la came mobile coopère. Ainsi, en coopérant directement ou indirectement avec une tête, la came rotative amène ainsi ladite tête en position d'utilisation ou en position escamotée.

Par exemple, le bouton peut être interposé entre les deux mécanismes à rochet selon la direction axiale.

Ainsi, un tel dispositif manuel est ergonomique grâce à son unique bouton latéral. La combinaison d'un unique bouton pour commander les deux mécanismes à rochet, et le faible encombrement général des mécanismes à rochet procure à ce dispositif manuel un encombrement réduit ayant des dimensions adaptables aux mains de la majorité des utilisateurs. Enfin les mécanismes à rochet étant fiables, le dispositif manuel est par conséquent également fiable.

Dans certains modes de réalisation, le bouton latéral est mobile axialement et comprend un unique curseur coopérant en butée selon la direction axiale avec le premier piston et avec le deuxième piston.

On comprend que le curseur est un élément du bouton qui est disposé à l'intérieur du carter et qui coopère avec les premier et deuxième pistons. Par exemple, selon la direction axiale, le curseur est disposé entre le premier piston et le deuxième piston. Ainsi, en actionnant le bouton dans un premier sens selon la direction axiale, on amène le curseur en butée avec le premier piston, grâce à quoi on actionne le premier mécanisme à rochet et on amène la première tête en position d'utilisation ou escamotée, tandis qu'en actionnant le bouton dans un deuxième sens selon la direction axiale, opposé au premier sens, on amène le curseur en butée avec le deuxième piston, grâce à quoi on actionne le deuxième mécanisme à rochet et on amène la deuxième tête en position d'utilisation ou escamotée. Ainsi, selon qu'on actionne le bouton dans un sens ou dans l'autre, on amène une tête d'une position à l'autre, et ce indépendamment de l'autre tête. Une telle structure présente un encombrement particulièrement réduit, et sa simplicité lui procure une grande fiabilité. Par ailleurs, le déplacement du bouton dans un sens pour actionner une tête, et dans l'autre sens pour actionner l'autre tête est assez intuitif, ce qui procure au dispositif manuel une certaine ergonomie.

Dans certains modes de réalisation, le curseur présente une première concavité et une deuxième concavité s'étendant toutes les deux axialement, la première concavité étant orientée vers la première tête et configurée pour recevoir le premier piston tandis que la deuxième concavité est orientée vers la deuxième tête et configurée pour recevoir le deuxième piston.

En recevant les pistons, les concavités assurent un guidage des pistons et l'alignement du curseur avec les pistons. De telles concavités permettent donc d'assurer l'alignement selon la direction axiale entre les pistons et le curseur, et ce quelle que soit la position axiale du curseur par rapport à chacun des pistons. La fiabilité est donc améliorée.

Par exemple, les concavités sont formées par des coupelles. On comprend donc que dans cet exemple, les coupelles sont disposées dos-à-dos selon la direction axiale.

Dans certains modes de réalisation, le curseur présente au moins une saillie radiale configurée pour limiter les mouvements selon la direction radiale du curseur au sein du carter.

Bien entendu, une direction radiale est une direction perpendiculaire à la direction axiale. Ces saillies radiales permettent de guider axialement le curseur à l'intérieur du carter et éviter que le curseur ne dévie radialement au sein du carter, par exemple lorsque l'utilisateur appuie sur le bouton pour l'actionner. On s'assure ainsi que le curseur et les pistons restent alignés selon la direction axiale, grâce à quoi on améliore encore la fiabilité du dispositif manuel.

Dans certains modes de réalisation, la première tête coopère en appui avec la première came rotative tandis que la deuxième tête est montée sur la deuxième came rotative.

Une telle structure permet de loger dans le carter d'une part une tête présentant une structure allongée, par exemple un corps d'écriture, un portemine, etc., la dite tête étant guidée axialement par le carter tandis qu'une simple coopération en appui avec la came rotative est suffisante pour faire renter/sortir la tête (ou une extrémité de la tête) du carter. D'autre part, cette structure permet de loger une tête de structure difficile à guider par le biais du carter, par exemple une gomme ou un coussinet pour écran capacitif, auquel cas le maintien de cette tête est réalisé par montage de cette dernière sur la came rotative. Une telle structure permet d'optimiser le maintien des têtes au sein du dispositif manuel, et donc sa robustesse, et d'autre part d'optimiser l'encombrement de la structure interne du dispositif manuel, et donc, par voie de conséquence, l'encombrement générale du dispositif manuel.

On comprend que le montage de la tête sur la came rotative peut être un montage direct ou indirect. Bien entendu, ce montage d'une tête sur une came rotative peut être réalisé dans tout autre dispositif que le dispositif manuel à deux têtes décrit dans le présent exposé. Un tel montage est notamment particulièrement intéressant en tant que tel lorsqu'il est difficile de faire coopérer le ressort avec la tête, pour des raisons structurelles ou de résistance/usure/fragilité de la tête. En effet, dans cas, un montage où la tête est montée sur la came rotative tandis que le ressort coopère avec la came rotative et pas avec la tête répond à des telles contraintes de conception.

Dans certains modes de réalisation, la première tête est un corps d'écriture tandis que la deuxième tête est un coussinet pour écran capacitif.

On comprend que le coussinet (en anglais « pad ») est une terminaison configurée pour interagir avec un écran capacitif. Le coussinet est conducteur (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

Dans certains modes de réalisation, la première tête est un corps d'écriture à encre thermochromique tandis que la deuxième tête est un corps de friction pour faire changer de couleur de l'encre thermochromique déposée sur un substrat à l'aide dudit corps d'écriture.

La structure du dispositif manuel est particulièrement bien adaptée pour des instruments d'écriture comprenant par exemple d'un côté un corps d'écriture, et de l'autre côté un gomme, un corps de friction, ou un coussinet pour écran capacitif.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un dispositif manuel vu en perspective,
- la figure 2 représente le dispositif manuel vue en coupe selon le plan de coupe II de la figure 1,
- la figure 3 représente le dispositif manuel de la figure 1 en éclaté,

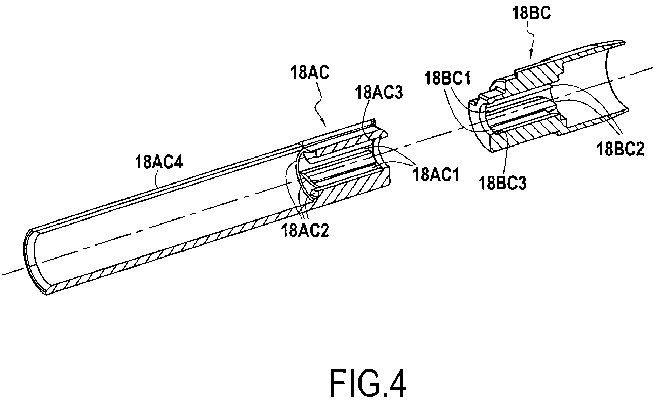

- la figure 4 représente les cames fixes vues en coupe, et
- les figures 5A, 5B, 5C et 5D représentent les différentes configurations du dispositif manuel selon que les têtes sont en position d'utilisation ou en position escamotée.

### DESCRIPTION DETAILLEE D'EXEMPLES DE REALISATION

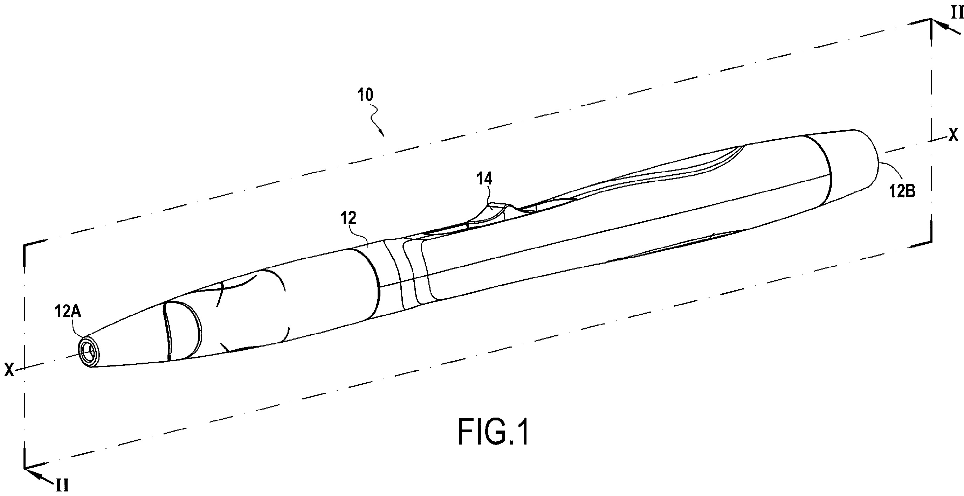

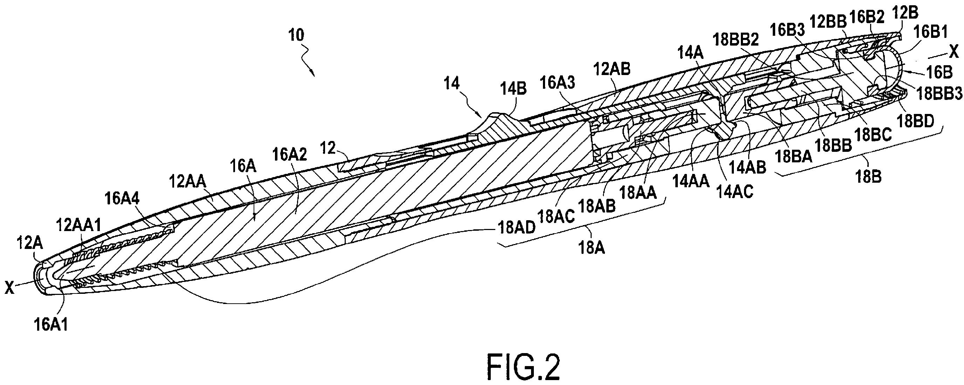

Les figures 1, 2 et 3 représentent un dispositif manuel 10, dans cet exemple un instrument d'écriture 10, s'étendant selon une direction axiale X et comprenant deux têtes 16A et 16B montées dans un carter 12 et rétractables au moyen d'un unique bouton latéral 14. Le carter présente une première extrémité distale 12A et une deuxième extrémité distale 12B opposée à la première extrémité distale selon la direction axiale X. La première tête 16A est mobile axialement entre une position escamotée dans laquelle elle est escamotée dans le carter 12 et une position d'utilisation dans laquelle elle fait saillie du carter 12 depuis la première extrémité distale 12A. De même, la deuxième tête 16B est mobile axialement entre une position escamotée dans laquelle elle est escamotée dans le carter 12 et une position d'utilisation dans laquelle elle fait saillie du carter 12 depuis la deuxième extrémité distale 12B. Les figures 1 et 2 représentent les première et deuxième têtes 16A et 16B en position escamotée.

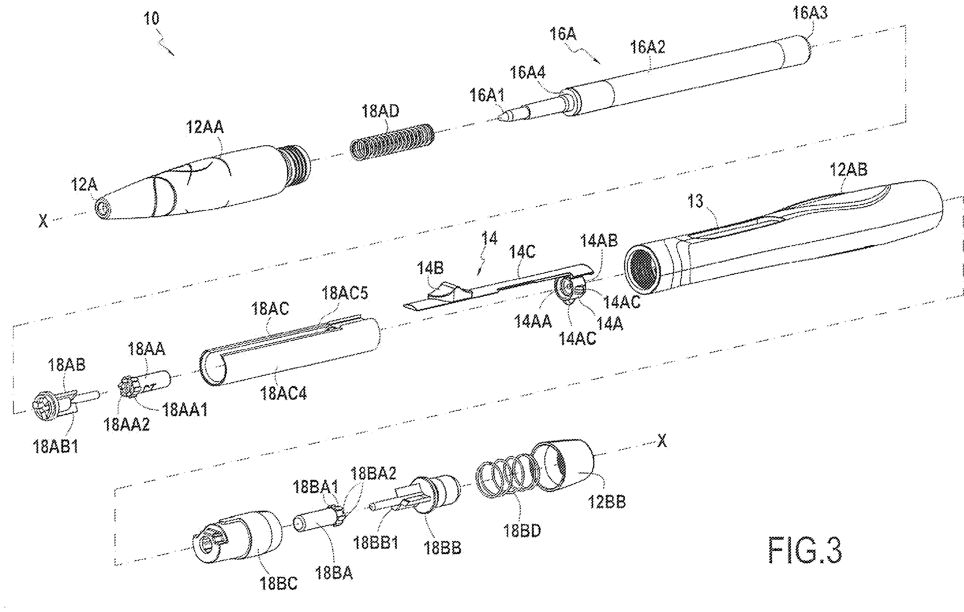

Plus précisément, en référence à la figure 3, le carter 12 comprend trois parties : un premier fût 12AA, un deuxième fût 12AB et un troisième fût 12 BB. Le premier fût 12AA et le deuxième fût 12AB sont assemblés ensemble par vissage. L'extrémité libre du premier fût 12AA définit la première extrémité 12A du carter 12. Le troisième fût 12BB est assemblé par encliquetage sur la came fixe 18BC décrite ci-après, tandis que la came fixe 18BC est elle-même montée par encliquetage dans le deuxième fût 12AB, les moyens d'encliquetage n'étant pas représentés. Ainsi, le deuxième fût 12AB forme un fût intermédiaire selon la direction axiale X entre le premier fût 12AA et le troisième fût 12BB. L'extrémité libre du troisième fût 12BB forme la deuxième extrémité 12B du carter 12.

Le fût intermédiaire 12AB présente une fenêtre latérale 13 s'étendant selon la direction axiale X et au travers de laquelle s'étend une partie de manipulation 14B du bouton 14 pour que l'utilisateur puisse actionner le bouton 14. La longueur axiale de la fenêtre 13 est suffisamment importante pour que le bouton 14 puisse être déplacé vers la première extrémité distale 12A et vers la seconde extrémité distale 12B selon la direction axiale X.

Le bouton 14 présente un unique curseur 14A, la partie de manipulation 14B et une tige 14C reliant la partie de manipulation 14B et le curseur 14A. Le curseur 14A présente une première concavité 14AA et une deuxième concavité 14AB, chacune de ces concavité s'étendant axialement (i.e. étant orientées) à l'opposé l'une de l'autre. Dans cet exemple, les concavités sont formées par des coupelles 14AA et 14AB. Par ailleurs, le curseur 14A présente des saillies radiales 14AC, dans cet exemple trois saillies radiales réparties à 90° deux-à-deux autour de la direction axiale et à 90° de la jonction entre la tige 14C et le curseur 14A. Ces saillies 14AC sont configurées pour limiter les mouvements du curseur 14A au sein du carter 12, dans cet exemple au sein du deuxième fût 12AB, selon la direction radiale.

Le bouton 14 coopère avec un premier mécanisme à rochet 18A et avec un deuxième mécanisme à rochet 18B. Le premier mécanisme à rochet 18A comprend un premier piston 18AA, une première came rotative 18AB, une première came fixe 18AC et un premier ressort 18AD. Le deuxième mécanisme à rochet 18B comprend un deuxième piston 18BA, une deuxième came rotative 18BB, une deuxième came fixe 18BC et un deuxième ressort 18BD.

Dans cet exemple, considéré selon la direction axiale X, le bouton 14 est interposé entre le premier et le deuxième mécanisme à rochet 18A et 18B. En effet, le curseur 14A du bouton 14 est disposé entre le premier piston 18AA et le deuxième piston 18BA. Le bouton 14 est mobile selon la direction axiale X, et coopère en butée, via le curseur 14A avec le premier piston 18AA et avec le deuxième piston 18BA. Par ailleurs, la coupelle 14AA du curseur 14A est configurée pour recevoir le premier piston 18AA tandis que la coupelle 14AB est configurée pour recevoir le deuxième piston 18BA. Dans cet exemple, le bord annulaire de chacune des coupelles 14AA et 14AB est sensiblement tronconique, de manière à former un centreur lors de l'approche d'un piston, grâce à quoi le piston se centre sur l'axe de ladite coupelle, et s'aligne selon la direction axiale X avec le curseur 14A.

Dans cet exemple, les premier et deuxième pistons 18AA et 18BA sont identiques. Ces pistons présentent respectivement des nervures axiales 18AA1 et 18BA1 et une couronne de dents 18AA2 et 18BA2. Les nervures axiales 18AA1 et 18BA1 coopèrent respectivement avec des rainures 18AC1 et 18BC1 des cames fixes 18AC et 18BC tandis que les couronnes de dents 18AA2 et 18BA2 coopèrent respectivement avec les dents 18AB1 et 18BB1 des cames rotatives 18AB et 18BB.

On note que les rainures 18AC1 et 18 BC1 des cames fixes 18AC et 18BC sont plus ou moins profondes selon la direction radiale, et alternent deux-à-deux selon la direction circonférentielle (i.e. une rainure plus profonde, une rainure moins profonde, une rainure plus profonde, etc.). Les extrémités axiales des rainures moins profondes forment un épaulement disposé dans la continuité des dents 18AC2 et 18BC2.

Ainsi, les pistons 18AA et 18BA sont bloqués en rotation autour de la direction axiale X (i.e. selon la direction circonférentielle) grâce à l'engagement des nervures 18AA1 et 18BA1 dans les rainures 18AC1 et 18BC1, respectivement. En poussant les pistons 18AA et 18BA selon la direction axiale X, les dents 18AA2 et 18BA2 coopèrent respectivement avec les dents 18AB1 et 18BB1 des cames rotatives 18AB et 18BB, grâce à quoi ces cames rotatives sont poussée selon la direction axiale jusqu'à se désengager respectivement des rainures 18AC1 et 18BC1 des cames fixes 18AC et 18BC. Une fois dégagées des rainures, grâce à aux faces inclinées des dents 18AA2 et 18BA2 des pistons 18AA et 18BA et des dents 18AB1 et 18BB1 des cames rotatives 18AB et 18BB, les cames rotatives 18AB et 18BB pivotent autour de la direction axiale X (i.e. selon la direction circonférentielle), et les dents 18AB1 et 18BB1 s'engagent avec les dents adjacentes 18AC2 et 18BC2 selon la direction circonférentielle, respectivement. Ainsi, les rainures des cames fixes alternant en rainure plus profonde/rainure moins profonde, les dents 18AB1, 18BB1 des cames rotatives se retrouvent soit bloquées axialement au niveau des dents 18AC2, 18BC2 (i.e. coopèrent axialement en butée contre une extrémité axiale d'une rainure moins profonde), soit s'engagent et coulissent axialement dans une rainure plus profonde et butent respectivement contre les pistons 18AA et 18BA, ces derniers coopérant en buté respectivement contre l'épaulement 18AC3, 18BC3 des première et deuxième cames fixes 18AC, 18BC. Ainsi, les cames rotatives prennent alternativement deux positions axiales distinctes correspondant respectivement à la position escamotée et à la position de travail des têtes. Les ressorts 18AD et 18BD poussent axialement respectivement les cames rotatives 18AB et 18BB contre les cames fixes ou contre les pistons, selon la position adoptée.

Dans cet exemple, la première came fixe 18AC présente une partie de douille 18AC4, et une rainure latérale 18AC5. La rainure latérale 18AC5 reçoit la tige 14C du bouton 14 en coulissement selon la direction axiale X, ce qui permet de guider le bouton 14 en coulissement selon la direction axiale X et d'éviter tout mouvement de rotation autour de l'axe X. La partie de douille 18AC4 reçoit une partie de la première tête 16A, ce qui permet de maintenir l'alignement selon la direction axiale X entre la première tête 16A et la première came rotative 18AB, et ce quelle que soit la position de la première came rotative 18AB. La première came fixe 18AC est montée dans le deuxième fût 12B par encliquetage, les moyens d'encliquetage n'étant pas représentés.

Les cames rotatives 18AB et 18BB coopèrent chacune avec une tête, la première came rotative 18AB coopérant avec la première tête 16A tandis que la deuxième came rotative 18BB coopère avec la deuxième tête 16B.

Plus précisément, dans cet exemple, la première tête 16A est un corps d'écriture, dans cet exemple un pointe à bille 16A1 montée sur un réservoir d'encre 16A2. L'extrémité axiale 16A3 du corps d'écriture 16A opposée à la pointe d'écriture 16A1 coopère axialement en appui contre la première came rotative 18AB1 grâce au ressort 18AD. En effet, le ressort 18AD est un ressort travaillant en compression en appui d'une part contre un épaulement axial 12AA1 du carter 12, et plus particulièrement dans cet exemple du premier fût 12AA, et d'autre part contre un épaulement 16A4 du corps d'écriture 16A. Ainsi, le ressort 18AD du premier mécanisme à rochet 18A coopère indirectement avec la première came rotative 18AB1, par l'intermédiaire de la première tête 16A.

La deuxième tête 16B est un coussinet pour écran capacitif. Ce coussinet 16B présente une extrémité distale 16B1 de coopération avec un écran capacitif, cette extrémité 16B1 présentant dans cet exemple une forme sensiblement hémisphérique creuse. L'extrémité 16B1 est disposée dans le prolongement d'une partie de fixation 16B2 de forme sensiblement cylindrique creuse. Cette partie de fixation 16B2 présente une collerette 16B3 disposée au voisinage de l'extrémité libre de la partie de fixation 16B2, à l'intérieur de la partie de fixation 16B2. Cette collerette 16B3 coopère par encliquetage avec une gorge annulaire 18BB3 ménagée dans l'embase de montage 18BB2 formée par une partie de la deuxième came rotative 18BB. En position d'utilisation, l'espace radial entre le coussinet 16B, et plus particulièrement la partie de fixation 16B2, et le troisième fût 12BB est suffisamment réduit pour que la collerette 16B3 reste engagée dans la gorge 18BB3 et assurer un montage fiable du coussinet 16B sur la deuxième came rotative 18BB pendant l'utilisation du coussinet 16B.

Par ailleurs pour assurer le bon fonctionnement du coussinet 16B, c'est-à-dire pour qu'il soit capable d'interférer/interagir avec un écran capacitif de sorte que sa présence en un point donné dudit écran capacitif soit détectable par ce dernier, au moins les deuxièmes cames rotative et fixe 18BB et 18BC ainsi que le deuxième fût 12AB sont conducteurs de courant électrique afin qu'un contact électrique puisse s'établir entre la main de l'utilisateur lorsqu'il manipule le dispositif manuel 10 via le deuxième fût 12AB, et le coussinet 16B. Par exemple, les deuxièmes cames rotative et fixe 18BB et 18BC et le deuxième fût 12AB sont en plastique conducteur de courant, par exemple en plastique chargé en noir de carbone ou en nanotubes de carbone, ou plus généralement chargé par tout type de charge conductrice connu par l'homme du métier.

Bien entendu, ce système de montage de coussinet sur une came rotative de mécanisme à rochet n'est pas limité à un dispositif manuel présentant deux têtes, et peut être transposé à n'importe quel dispositif manuel présentant une seule tête ou plus de deux têtes.

Selon une variante non représentée, la première tête 16A contient de l'encre thermochromique dans le réservoir 16A2 tandis que la deuxième tête 16B n'est pas creuse et forme un corps de friction pour faire changer de couleur, par friction, l'encre thermochromique déposée à l'aide de la première tête 16A sur un substrat.

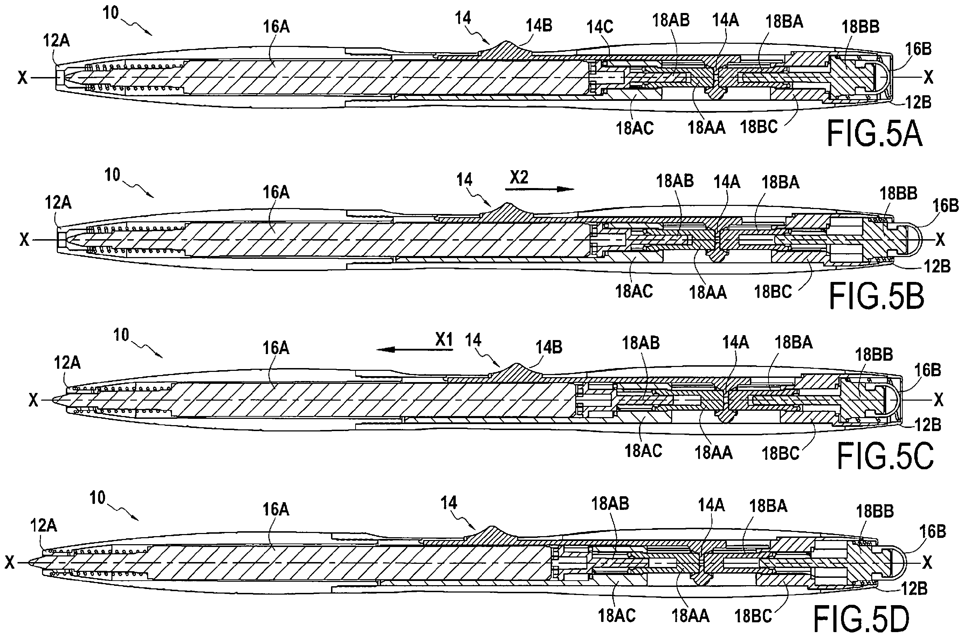

Ainsi, en manipulant le bouton 14 selon la direction axiale X dans un premier sens X1 vers la première tête 16A, on actionne le premier mécanisme à rochet 18A ce qui a pour effet de faire rentrer/sortir la première tête dans/depuis le carter 12. Sur les figures 5C et 5D, la première tête 16A est sortie du carter 12, elle est donc en position d'utilisation. Sur les figures 5A et 5B, la première tête 16A est rentrée dans le carter 12, elle est donc en position escamotée.

De même, en manipulant le bouton 14 selon la direction axiale X dans un deuxième sens X2 vers la deuxième tête 16B (i.e. opposé au premier sens X1), on actionne le deuxième mécanisme à rochet 18B ce qui a pour effet de faire rentrer/sortir la deuxième tête 16B dans/depuis le carter 12. Sur les figures 5B et 5D, la deuxième tête 16A est sortie du carter 12, elle est donc en position d'utilisation. Sur les figures 5A et 5C, la deuxième tête 16B est rentrée dans le carter 12, elle est donc en position escamotée.

Le bouton 14 coopérant avec les premier et deuxième mécanismes à rochet 18A et 18B uniquement en butée, et ces mécanismes étant actionnés dans cet exemple selon la même direction mais selon des sens opposés, on s'assure que l'actionnement d'un mécanisme est totalement indépendant de l'actionnement de l'autre mécanisme, et vice versa. On peut ainsi très facilement placer le dispositif manuel 10 dans n'importe laquelle des configurations représentées sur les figures 5A à 5D.

Ainsi, lorsqu'on manipule le bouton 14 dans le sens X1, on n'actionne que la première tête 16A et pas la deuxième tête 16B, tandis que lorsqu'on manipule le bouton 14 dans le sens X2, on n'actionne que la deuxième tête 16B et pas la première tête 16A. Par exemple, pour passer de la configuration de la figure 5B à la configuration de la figure 5C, il faut actionner une fois le bouton dans le sens X2 pour faire rentrer la deuxième tête 16B et une fois le bouton dans le sens X1 pour faire sortir la première tête 16A.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

## Revendications

1. Dispositif manuel (10) s'étendant selon une direction axiale (X), comprenant un carter (12) présentant une première extrémité distale (12A) et une deuxième extrémité distale (12B) opposée à la première extrémité distale (12A) selon la direction axiale (X), une première tête (16A) mobile axialement entre une position d'utilisation dans laquelle la première tête (16A) fait saillie du carter (12) depuis la première extrémité (12A) et une position escamotée dans laquelle la première tête (16A) est escamotée dans le carter (12), une deuxième tête (16B) mobile axialement entre une position d'utilisation dans laquelle la deuxième tête (16B) fait saillie du carter (12) depuis la deuxième extrémité (12B) et une position escamotée dans laquelle la deuxième tête (12) est escamotée dans le carter (12), et un unique bouton latéral (14) configuré pour amener la première tête (16A) et la deuxième tête (16B), indépendamment l'une de l'autre, depuis la position escamotée à la position d'utilisation et vice versa, le bouton latéral (14) coopérant avec un premier mécanisme à rochet (18A) pour faire passer la première tête (16A) de la position escamotée à la position d'utilisation et vice versa, et avec un deuxième mécanisme à rochet (18B) pour faire passer la deuxième tête (16B) de la position escamotée à la position d'utilisation et vice versa, dans lequel chaque mécanisme à rochet (18A, 18B) comprend respectivement un premier et un deuxième piston (18AA, 18BA), une première et une deuxième came rotative (18AB, 18BB), une première et une deuxième came fixe (18AC, 18BC) recevant respectivement la première et la deuxième came rotative (18AB, 18BB), et un premier et un deuxième ressort (18AD, 18BD).

2. Dispositif manuel (10) selon la revendication 1, dans lequel le bouton latéral (14) est mobile axialement et comprend un unique curseur (14A) coopérant en butée selon la direction axiale (X) avec le premier piston (18AA) et avec le deuxième piston (18BA).

3. Dispositif manuel (10) selon la revendication 2, dans lequel le curseur (14A) présente une première concavité (14AA) et une deuxième concavité (14AB) s'étendant toutes les deux axialement, la première concavité (14AA) étant orientée vers la première tête (16A) et configurée pour recevoir le premier piston (18AA) tandis que la deuxième concavité (14AB) est orientée vers la deuxième tête (16B) et configurée pour recevoir le deuxième piston (18BA).

4. Dispositif manuel (10) selon la revendication 2 ou 3, dans lequel le curseur (14A) présente au moins une saillie radiale (14AC) configurée pour limiter les mouvements selon la direction radiale du curseur (14A) au sein du carter (12).

5. Dispositif manuel (10) selon l'une quelconque des revendications 1 à 4, dans lequel la première tête (16A) coopère en appui avec la première came rotative (18AB) tandis que la deuxième tête (16B) est montée sur la deuxième came rotative (18BB).

6. Dispositif manuel (10) selon l'une quelconque des revendications 1 à 5, dans lequel la première tête est un corps d'écriture (16A) tandis que la deuxième tête est un coussinet pour écran capacitif (16B).

7. Dispositif manuel (10) selon l'une quelconque des revendications 1 à 5 dans lequel la première tête est un corps d'écriture (16A) à encre thermochromique tandis que la deuxième tête (16B) est un corps de friction pour faire changer de couleur l'encre thermochromique déposée sur un substrat à l'aide dudit corps d'écriture (16A).

## Patentansprüche

1. Handgerät (10), die sich in einer axialen Richtung (X) erstreckt, umfassend ein Gehäuse (12), das ein erstes distales Ende (12A) und ein zweites distales Ende (12B) aufweist, das dem ersten distalen Ende (12A) in der axialen Richtung (X) entgegengesetzt ist, einen ersten Kopf (16A), der axial zwischen einer Verwendungsposition, in welcher der erste Kopf (16A) aus dem Gehäuse (12) über das erste Ende (12A) hinausragt, und einer zurückgezogenen Position, in welcher der erste Kopf (16A) in das Gehäuse (12) zurückgezogen ist, beweglich ist, einen zweiten Kopf (16B), der axial zwischen einer Verwendungsposition, in welcher der zweite Kopf (16B) aus dem Gehäuse (12) über das zweite Ende (12B) hinausragt, und einer zurückgezogenen Position, in welcher der zweite Kopf (12) in das Gehäuse (12) zurückgezogen ist, beweglich ist, und einen einzelnen seitlichen Knopf (14), der dazu ausgestaltet ist, den ersten Kopf (16A) und den zweiten Kopf (16B) unabhängig voneinander aus der zurückgezogenen Position in die Verwendungsposition und umgekehrt zu bringen, wobei der seitliche Knopf (14) mit einem ersten Ratschenmechanismus (18A) zusammenwirkt, um den ersten Kopf (16A) aus der zurückgezogenen Position in die Verwendungsposition und umgekehrt übergehen zu lassen, sowie mit einem zweiten Ratschenmechanismus (18B), um den zweiten Kopf (16B) aus der zurückgezogenen Position in die Verwendungsposition und umgekehrt übergehen zu lassen, wobei jeder Ratschenmechanismus (18A, 18B) jeweils einen ersten und einen zweiten Kolben (18AA, 18BA), einen ersten und einen zweiten drehbaren Nocken (18AB, 18BB), einen ersten und einen zweiten fixierten Nocken (18AC, 18BC), die jeweils den ersten und den zweiten drehbaren Nocken (18AB, 18BB) aufnehmen, und eine erste und eine zweite Feder (18AD, 18BD) umfasst.

2. Handgerät (10) nach Anspruch 1, wobei der seitliche Knopf (14) axial beweglich ist und einen einzelnen Schieber (14A) umfasst, der in der axialen Richtung (X) mit dem ersten Kolben (18AA) und mit dem zweiten Kolben (18BA) durch Anschlag zusammenwirkt.

3. Handgerät (10) nach Anspruch 2, wobei der Schieber (14A) eine erste Vertiefung (14AA) und eine zweite Vertiefung (14AB) aufweist, die sich beide axial erstrecken, wobei die erste Vertiefung (14AA) zu dem ersten Kopf (16A) hin orientiert und dazu ausgestaltet ist, den ersten Kolben (18AA) aufzunehmen, während die zweite Vertiefung (14AB) zu dem zweiten Kopf (16B) hin orientiert und dazu ausgestaltet ist, den zweiten Kolben (18BA) aufzunehmen.

4. Handgerät (10) nach Anspruch 2 oder 3, wobei der Schieber (14A) mindestens einen radialen Vorsprung (14AC) aufweist, der dazu ausgestaltet ist, die Bewegungen des Schiebers (14A) gemäß der radialen Richtung innerhalb des Gehäuses (12) zu begrenzen.

5. Handgerät (10) nach einem der Ansprüche 1 bis 4, wobei der erste Kopf (16A) durch Anliegen mit dem ersten drehbaren Nocken (18AB) zusammenwirkt, während der zweite Kopf (16B) auf dem zweiten drehbaren Nocken (18BB) montiert ist.

6. Handgerät (10) nach einem der Ansprüche 1 bis 5, wobei der erste Kopf ein Schreibkörper (16A) ist, während der zweite Kopf ein Aufsatz (16B) für einen kapazitiven Bildschirm ist.

7. Handgerät (10) nach einem der Ansprüche 1 bis 5, wobei der erste Kopf ein Schreibkörper (16A) mit thermochromer Tinte ist, während der zweite Kopf (16B) ein Reibungskörper ist, um die Farbe der thermochromen Tinte, die mithilfe des Schreibkörpers (16A) auf ein Substrat abgegeben wurde, zu verändern.

## Claims

1. A hand held device (10) extending along an axial direction (X), comprising a casing (12) presenting a first distal end (12A) and a second distal end (12B) opposite the first distal end (12A) along the axial direction (X), a first head (16A) that is movable axially between a position for use in which the first head (16A) projects from the casing (12) from the first end (12A) and a retracted position in which the first head (16A) is retracted inside the casing (12), a second head (16B) that is movable axially between a position for use in which the second head (16B) projects from the casing (12) from the second end (12B) and a retracted position in which the second head (12) is retracted inside the casing (12), and a single side button (14) that is configured to bring the first head (16A) and the second head (16B), independently of each other, from the retracted position to the position for use and vice versa, the side button (14) cooperating with a first ratchet mechanism (18A) in order to cause the first head (16A) to pass from the retracted position to the position for use and vice versa, and with a second ratchet mechanism (18B) in order to cause the second head (16B) to pass from the retracted position to the position for use and vice versa, wherein each ratchet mechanism (18A, 18B) respectively comprises a first and a second piston (18AA, 18BA), a first and a second rotary cam (18AB, 18BB), a first and a second stationary cam (18AC, 18BC) respectively receiving the first and the second rotary cam (18AB, 18BB), and a first and a second spring (18AD, 18BD).

2. A hand held device (10) according to claim 1, wherein the side button (14) is movable axially and includes a single slider (14A) cooperating in abutment along the axis (X) both with the first piston (18AA) and with the second piston (18BA).

3. A hand held device (10) according to claim 2, wherein the slider (14A) presents a first concavity (14AA) and a second concavity (14AB), both extending axially, the first concavity (14AA) being oriented towards the first head (16A) and configured to receive the first piston (18AA), while the second concavity (14AB) is oriented towards the second head (16B) and configured to receive the second piston (18BA).

4. A hand held device (10) according to claim 2 or claim 3, wherein the slider (14A) presents at least one radial projection (14AC) configured to limit radial movements of the slider (14A) within the casing (12).

5. A hand held device (10) according to any one of claims 1 to 4, wherein the first head (16A) cooperates with the first rotary cam (18AB) by bearing against it, while the second head (16B) is mounted on the second rotary cam (18BB).

6. A hand held device (10) according to any one of claims 1 to 5, wherein the first head is a writing body (16A) while the second head is a pad (16B) for a capacitive screen.

7. A hand held device (10) according to any one of claims 1 to 5, wherein the first head is a writing body (16A) with thermochromic ink, while the second head (16B) is a friction body for changing the color of the thermochromic ink deposited on a substrate by means of said writing body (16A).
